# EUROPÄISCHE PATENTSCHRIFT

(11) **EP 4 345 512 B1**
(45) Veröffentlichungstag und Bekanntmachung des Hinweises auf die Patenterteilung: **29.10.2025**
(21) Anmeldenummer: 22198278.8
(22) Anmeldetag: 28.09.2022
(51) Int. Cl.: G01V 8/20, F16P 3/14, G06V 20/52, G01S 17/02, B65G 43/08, G01S 7/481, G01S 17/00, G01S 17/88, G06T 7/60, G06T 7/73

(54) **ÜBERWACHUNGSEINRICHTUNG UND VERFAHREN ZUR ÜBERWACHUNG EINER ÖFFNUNG**
MONITORING DEVICE AND METHOD FOR MONITORING AN OPENING
DISPOSITIF DE SURVEILLANCE ET PROCÉDÉ DE SURVEILLANCE D'UNE OUVERTURE

(43) Veröffentlichungstag der Anmeldung: 03.04.2024
(73) Patentinhaber: Siemens Aktiengesellschaft, 80333 München (DE)
(72) Erfinder: Walter, Maximilian, 90408 Nürnberg (DE); Taschke, Ulrich, 90766 Fürth (DE)
(74) Vertreter: Siemens Patent Attorneys

(56) Entgegenhaltungen:
- EP-B1- 3 290 770
- DE-A1- 10 026 305
- DE-A1- 102004 038 906
- DE-A1- 102018 122 263

## Beschreibung

Die Erfindung betrifft eine Überwachungseinrichtung zur Überwachung einer Öffnung, durch welche Objekte mittels eines Transportmittels eingeschleust werden, aufweisend einen Lichtvorhang, umfassend eine Sender-Anordnung mit mehreren Lichtstrahlen emittierenden Sendern und eine Empfänger-Anordnung mit mehreren Lichtstrahlen empfangenen Empfängern, welche eine Unterbrechung eines Lichtstrahls erkennen und ein Signal bereitstellen, wobei der Lichtvorhang an der Öffnung derart angeordnet ist, dass die Lichtstrahlen orthogonal zu einer Transportebene des Transportmittels verlaufen, weiterhin aufweisend ein Abtastmittel ausgestaltet die Signale der Empfänger des Lichtvorhangs in zeitlich aufeinander folgenden Abtastschritten abzutasten und jeweils als eine Signalreihe bereitzustellen, eine Steuerungseinheit umfassend ein Sicherheitsprogramm ausgestaltet ein Abschaltsignal auszusenden, um einen gefahrbringenden Zustand zu vermeiden.

Potenziell gefährliche Maschinen z.B. Pressen oder sich schnell bewegende Roboterarme befinden sich in einem gesicherten, umzäunten Bereich. Beispielsweise sollen durch eine Öffnung Pakete oder Kisten beliebiger Größe dem umzäunten Bereich zugeführt werden.

In der Industrie sind bereits Verfahren und Vorrichtungen bekannt, welche zur Absicherung von Durchgängen, durch welche bestimmte zulässige Objekte in einen Gefahrenbereich eintreten oder aus diesen austreten, während ein Eintreten oder Austreten von nicht zulässigen Objekten, insbesondere von Personen verhindert werden soll, bekannt. Anwendungen hierfür sind z.B. eine Zugangssicherung von automatischen Fertigungsanlagen, die Absicherung von Einfahrtsöffnungen zu Fertigungszeilen, die Absicherung von Abkantpressen und Palettieranlagen, die Transporttechnik, die Förder- und Lagertechnik, die Verpackungsindustrie, der Maschinenbau und die Automobilindustrie.

Es ist bekannt, solche Durchgänge oder Öffnungen durch ein Lichtgitter abzusichern, bei welchem in einer Reihe angeordnete Sendeeinheiten Lichtstrahlen aussenden, die von entsprechend angeordneten Empfangseinheiten empfangen werden. Eine Unterbrechung der Lichtstrahlen signalisiert den Durchtritt eines Objektes. Falls ein nicht zulässiges Objekt das Lichtgitter durchtritt, wird eine Sicherheitsfunktion, z.B. ein Alarm, ausgelöst, eine gefährdende Produktionsmaschine abgeschaltet oder ihr Tempo verlangsamt. Damit die zulässigen Objekte durch den abgesicherten Durchgang oder die Öffnung hindurch gelangen können, wird in der EP 2 108 879 B1 ein entsprechendes Verfahren und eine Vorrichtung vorgestellt. Das vorgestellte Verfahren hat den Nachteil, dass zulässige Objekte vorher in einem Lernschritt angelernt werden müssen, und darüber hinaus hat das nach dem Stand der Technik offenbarte Verfahren den Nachteil, dass die Objekte vorher ausgerichtet werden müssen. Bei Verfahren, die nicht mit dem Ändernschritt arbeiten, ist es von Nachteil, dass die Öffnung exakt dieselbe Breite wie das zulässige Objekt haben muss, damit Personen den Lichtvorhang nicht unbemerkt Passieren können, in dem sie den Lichtvorhang gemeinsam mit dem zulässigen Objekt durchschreiten.

In der DE 10 2004 038 906 A1 wird ebenfalls eine Überwachungseinrichtung für bewegliche Objekte offenbart. Die Vorrichtung hat den Nachteil, dass die Objekte vorher ausgerichtet werden müssen.

Die EP 3 290 770 B1 offenbart ebenfalls eine Überwachungsvorrichtung, wobei diese auf Mutingsensoren verzichten kann.

Der Erfindung liegt die Aufgabe zugrunde, eine eingangs genannte Überwachungseinrichtung anzugeben, bei welchem es nicht notwendig ist, die Objekte vorher anzulernen, d.h. beispielsweise für Kisten, sollen Kisten beliebiger Höhe, Breite und Länge durch die Öffnung gelangen können und sicher detektiert werden.

Auch ist es eine Aufgabe der Erfindung das die Kisten um einen beliebigen Winkel gedreht auf einem Transportband liegen können und doch sicher erkannt werden.

Die Aufgabe wird durch das System gemäß Anspruch 1 und das Verfahren zur Überwachung einer Öffnung gemäß Anspruch 4 gelöst.

Die Objekte sind vorzugsweise Kisten und das Transportmittel ist vorzugsweise eine Reihe von Bändern oder Rollen, welche die Kisten transportieren und die Öffnungen passieren lassen, die durch einen Lichtvorhang überwacht wird. Der Lichtvorhang ist so angeordnet, dass die Lichtstrahlen senkrecht verlaufen, wodurch die Form einer Grundfläche der Kiste bzw. anderer Objekte für den Lichtvorhang erkennbar wird.

Zusätzlich ist für den Lichtvorhang eine Bildverarbeitungseinheit bzw. das Objekterkennungssystem angebracht, das in der Lage ist, die sich auf den Band bewegenden Objekte zu erkennen, zu klassifizieren, und zu analysieren. Das Objekterkennungssystem bzw. das Bildverarbeitungssystem und der Lichtvorhang senden dann ihre Daten in Echtzeit an eine funktional sichere Steuerung. Basierend auf diesen Informationen entscheidet die Steuerung, ob das Objekt, das den Lichtvorhang passiert z.B. quaderförmig ist oder nicht. Wenn ein ungültiges Objekt erkannt wird, erfolgt eine sichere Reaktion z.B. können die Antriebe einer potenziell gefährlichen Maschine stillgesetzt werden.

Die Sicherheit wird weiterhin erhöht, wenn der Lichtvorhang weiterhin ausgestaltet ist ein einzelnes Boolesches Signal an die Steuerungseinheit zu übertragen, wobei das Sicherheitsprogramm ausgestaltet ist, aufgrund des einzelnen Booleschen Signals das Abschaltsignal zu erzeugen, wobei das Sicherheitsprogramm weiterhin ausgestaltet ist, dass für den Fall, dass die zu erwartende Signalreihe mit der aktuell aufgenommenen Signalreihe übereinstimmt, das Erzeugen des Abschaltsignals unterdrückt wird.

Da jetzt der Lichtvorhang ein zusätzliches einzelnes sicherheitsgerichtetes Boolesches Signal an die Sicherheitssteuerung überträgt, sobald mindestens ein Lichtstrahl unterbrochen ist, kann dieses Signal bereits eine sichere Reaktion z.B. das Abschalten der Antriebe auslösen. Aber genau dann, wenn die Signalreihe aus dem Lichtvorhang bzw. aus den Empfängern des Lichtvorhangs mit den zu erwartenden Bits der zu erwartenden Signalreihe der erzeugten Matrix übereinstimmt, wird das auslösende Sicherheitssignal unterdrückt, was den entscheidenden Vorteil hat, dass eine Kiste, welche derart positioniert ist, dass eine seiner Kanten als erstes den Lichtvorhang durchbricht nicht zu einer sicheren Reaktion führt. Dies hat den entscheidenden Vorteil, dass die aktuell aufgenommene Signalreihe nicht sicherheitsbezogen übertragen werden muss, die Signalreihe kann also standardmäßig übertragen werden. Das hat wiederum den Vorteil, dass der sicherheitsgerichtete Datenverkehr entlastet wird. Denn ein T-Telegramm kann derzeit nur 13-Byte Safety-Daten pro Telegramm übertragen.

Die Sicherheit der Überwachungseinrichtung wird noch einmal ein weiteres Mal verbessert, wenn sie einen weiteren Lichtvorhang aufweist, wobei der weitere Lichtvorhang an der Öffnung derart angeordnet ist, dass die Lichtstrahlen parallel zu der Transportebene verlaufen.

Bei der zuvor beschriebenen Überwachungseinrichtung mit nur einem Lichtvorhang besteht die Gefahr, insbesondere bei großen Kisten, dass sich eine Person auf eine der Kisten setzt. Dadurch bleibt die Grundfläche des Objektes quadratisch, und die Person könnte unbemerkt in den Schutzbereich gelangen. Als Lösung wird in diesem Fall die Verwendung des weiteren Lichtvorhangs vorgeschlagen, der mit seinen Lichtstrahlen horizontal ausgerichtet ist. Dieser Lichtvorhang sendet dann in analoger Weise ein zeitabhängiges Sensorsignal, oder eine zeitabhängige Signalreihe oder einen zeitabhängigen Bitvektor an die fehlersichere Steuerungseinheit.

Bei einem Verfahren zur Überwachung einer Öffnung, durch welche Objekte mittels eines Transportmittels eingeschleust werden, wobei in oder unmittelbar vor der Öffnung mit einem Lichtvorhang Lichtstrahlen erzeugt werden, werden mehrere Lichtstrahlen emittierende Sender einer Senderanordnung auf mehreren Lichtstrahlen empfangene Empfänger einer Empfänger-Anordnung ausgerichtet, wobei bei einer Unterbrechung eines Lichtstrahls diese erkannt wird, und es für den jeweiligen Empfänger ein Signal bereitgestellt wird, wobei der Lichtvorhang in oder unmittelbar vor der Öffnung derart betrieben wird, dass die Lichtstrahlen orthogonal zu einer Transportebene des Transportmittels verlaufen, wobei mit einem Abtastmittel die Signale der Empfänger des Lichtvorhangs in zeitlich aufeinander folgenden Abtastschritten abgetastet werden und als eine Signalreihe bereitgestellt werden, und um einen gefahrbringenden Zustand zu vermeiden wird über eine Steuerungseinheit mit einem Sicherheitsprogramm ein Abschaltsignal ausgesendet, bei solch einem Verfahren wird die eingangs genannte Aufgabe dadurch gelöst, dass entgegen einer Transportrichtung vor dem Lichtvorhang ein Objekterkennungssystem betrieben wird, die Objekte zu erkennen und daraus Parameter für ihre geometrische Form ableitet, wobei mittels eines Rekonstruktionsalgorithmus aus den Parametern eine Matrix mit zu erwartenden Signalreihen in ihrer zeitlichen Abfolge erzeugt werden, wie diese bei einem Durchgang der Objekte durch die Öffnung entstehen, mit einem Vergleichsmittel werden dann Spalte für Spalte der Matrix die zu erwartenden Signalreihen mit den aktuell beim Durchgang des Objektes erzeugten Signalreihen verglichen, wobei der spaltenweise Vergleich mit den Abtastschritten synchronisiert wird, wenn eine Abweichung zwischen der zu erwartenden Signalreihe und der aktuell aufgenommenen Signalreihe festgestellt wird, wird das Abschaltsignal erzeugt. Mit diesen Verfahren ist es nun möglich, auf allgemeine Weise Objekte zu erkennen, d.h. für den Fall von zu transportierenden Kisten können die Kisten nun eine beliebige Höhe, Breite und Länge aufweisen. Außerdem können die Kisten um einen beliebigen Winkel gedreht auf den Band liegen.

Das Objekterkennungssystem hat die Aufgabe beispielsweise rechteckige Objekte zu erkennen und jeweils folgende Parameter zu bestimmen:
- Einen Mittelpunkt (cx,cy),
- Eine Breite und eine Länge (w,l) und
- Eine Orientierung auf dem Band (α, Drehung und z-Achse).

Ein weiterer Vorteil ist, dass das Objekterkennungssystem nicht zwingend in sicherer Technik realisiert sein muss, da ein Fehler bei der Extraktion der Parameter oder ein nichterkennen eines Objektes nachfolgend zu einer sicheren Reaktion führt. Denn die Parameter werden an eine Anwendung gesendet, die sicherheitsgerichtet, z.B. auf einer Siemens-F-CPU, ausgeführt wird. Diese F-CPU rekonstruiert mit einem entsprechenden Programm aus den Parametern einen Erwartungswert für das Verhalten des Lichtvorhangs. Konkret wird eine zu erwartende Bitmatrix generiert, die die zeitliche Abfolge der Unterbrechung der einzelnen Lichtstrahlen darstellt. Beim Durchlaufen des Objektes durch den Lichtvorhang wird diese Bitmatrix spaltenweise mit den tatsächlich generierten Sensordaten, beispielsweise ein Feld von Variablen und des Typs Boolean, das angibt, welche Lichtstrahlen unterbrochen sind, verglichen. Die Sensordaten müssen auch nicht sicherheitsgerichtet erfasst werden oder übertragen werden, sondern es genügt eine nicht-sicherheitsgerichtete Erfassung und Übertragung.

Selbst wenn eine Kamera, eine Bilderkennung und eine Übertragung der Parameter sowie die einzelnen Bits des Lichtvorhangs nicht-sicherheitsgerichtet implementiert sind, kann es nicht zu potenziell gefährlichen Ausfällen des Gesamtsystems kommen. Dies wird kurz anhand von zwei Beispielen erläutert.

Beispiel 1: Das Objekterkennungssystem bzw. die Bilderkennung versagt vollständig, und erkennt ein Objekt nicht. Dann liefert das Objekterkennungssystem auch keine Parameter an die F-CPU, und es wird eine leere Bit-Matrix generiert. Der anschließende Vergleich schlägt fehl, sobald das Objekt in den Lichtvorhang eindringt. Das Boolesche Signal des Lichtvorhangs wird dann nicht ignoriert, und die sichere Reaktion wird eingeleitet.

Beispiel 2: Das Objekterkennungssystem bzw. die Bilderkennung versagt, weil sie ein nicht kistenförmiges Objekt (z.B. eine Person) fälschlicher Weise als Kiste erkennt. In diesem Fall liefert sie falsche Parameter an die F-CPU. In der F-CPU wird ein rechteckiges Objekt in der Bit-Matrix generiert. Diese Bit-Matrix stimmt jedoch nicht mit dem tatsächlichen Objekt überein, da dieses gemäß Annahme nicht rechteckig ist. Der Vergleich schlägt für mindestens eine Spalte fehl, was dazu führt, dass das Boolesche Signal des Lichtvorhangs nicht ignoriert wird. Dies führt zur sicheren Reaktion.

Darum ist es von Vorteil, wenn der Lichtvorhang weiterhin betrieben wird, ein einzelnes Boolesche Signal an die Steuerungseinheit zu übertragen und aufgrund des einzelnen Booleschen Signals das Abschaltsignal zu erzeugen, wobei für den Fall, dass die zu erwartende Signalreihe mit der aktuell aufgenommenen Signalreihe übereinstimmt, das Erzeugen des Abschaltsignals unterdrückt wird. Mit Vorteil kann hierdurch auf eine sicherheitsgerichtete Übertragung der Signalreihe verzichtet werden.

Die Zeichnung zeigt ein Ausführungsbeispiel der Erfindung, dabei zeigt
- FIG 1: eine Schutzzone nach dem Stand der Technik,
- FIG 2: eine erfindungsgemäße Überwachungseinrichtung,
- FIG 3: das Erzeugen einer Matrix mit zu erwartenden Signalreihen,
- FIG 4, 5, 6: beispielhafte Signalreihen in jeweils einer Matrix und
- FIG 7 und 8: das Prinzip bei Einsatz eines zweiten Lichtvorhangs.

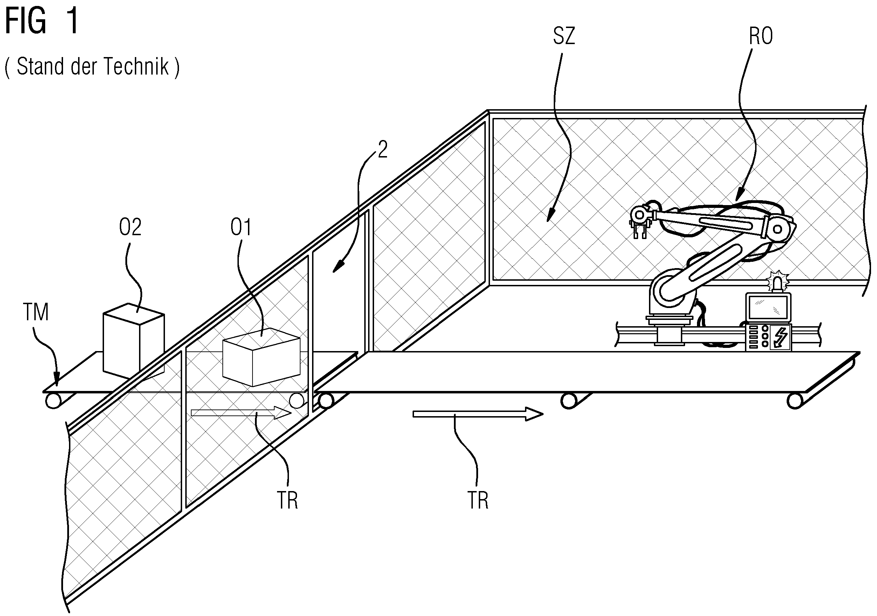

Gemäß FIG 1 ist ein Roboter RO in einer Schutzzone SZ dargestellt. In die Schutzzone SZ können über eine Öffnung 2 Objekte 01,02 mittels eines Transportmittels TM in einer Transportrichtung TR gefördert werden.

Da der Roboter RO eine potenziell gefährliche Maschine ist, muss sichergestellt werden, dass durch die Öffnung 2 nur zugelassene Objekte O1,O1 und niemals ein Mensch gelangen darf. Dazu wird im Folgenden eine Überwachungseinrichtung mit einem Lichtvorhang vorgestellt.

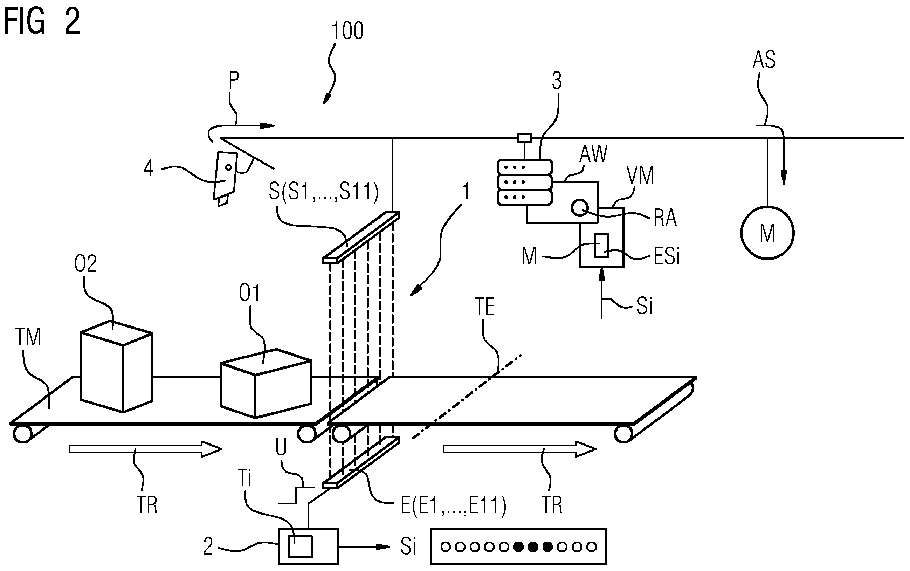

Die FIG 2 zeigt eine Überwachungseinrichtung 100 zur Überwachung der Öffnung 2, durch die ein erstes Objekt O1 und ein zweites Objekt O2 mittels des Transportmittels TM eingeschleust werden. Die Öffnung 2 gemäß FIG 1 ist nun mit einem Lichtvorhang 1 gesichert. Der Lichtvorhang 1 ist derart angeordnet, dass die Lichtstrahlen orthogonal zu einer Transportebene TE des Transportmittels TM verlaufen. Der Lichtvorhang 1 weist dazu eine Sender-Anordnung S mit mehreren Lichtstrahlen emittierenden Sendern S1,...,S11 und eine Empfänger-Anordnung E mit mehreren Lichtstrahlen empfangenen Empfängern E1,...,E11 auf. Die Empfänger E1,...,E11 erkennen eine Unterbrechung eines Lichtstrahls und generieren ein Signal U.

Ein Abtastmittel 2 steht mit dem Lichtvorhang 1 in Verbindung und ist derart ausgestaltet die Signale U der Empfänger E1,...,E11 des Lichtvorhangs 1 in zeitlich aufeinander folgenden Abtastschritten Ti abzutasten und jeweils als eine Signalreihe Si bereitzustellen.

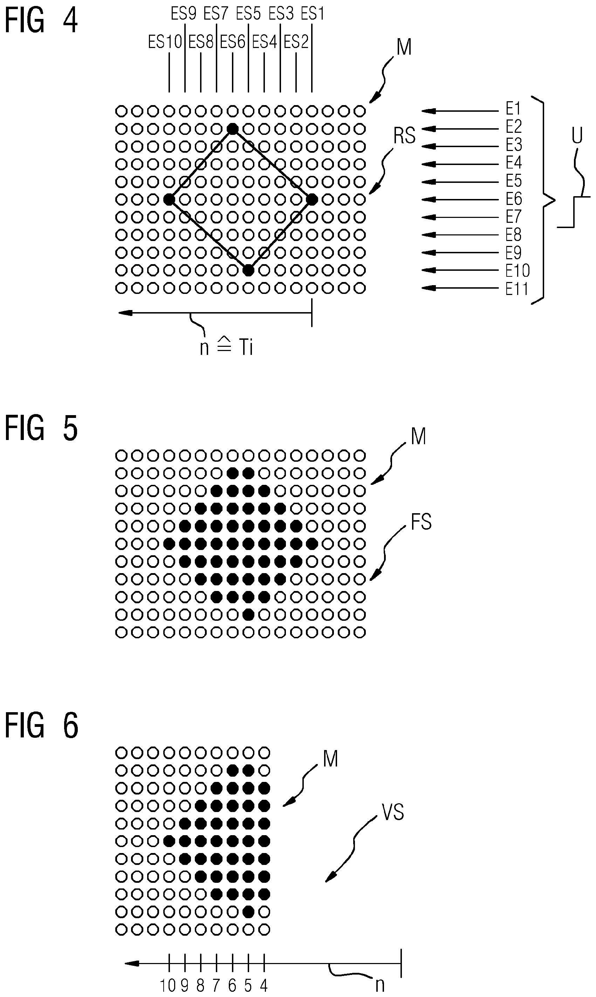

Eine Steuerungseinheit 3 umfassend ein Sicherheitsprogramm AW ist ausgestaltet ein Abschaltsignal AS auszusenden, um einen gefahrbringenden Zustand zu vermeiden. Beispielsweise wird ein Motor M des Transportbandes gestoppt. Vor dem Lichtvorhang 1 ist ein Objekterkennungssystem 4 angeordnet und ausgestaltet die Objekte 01,02 zu erkennen und daraus Parameter P für ihre geometrische Form abzuleiten. Das Sicherheitsprogramm AW der Steuerungseinheit 3 weist einen Rekonstruktionsalgorithmus RA auf, welcher ausgestaltet ist aus den Parametern P eine Matrix M mit zu erwartenden Signalreihen ESi in ihrer zeitlichen Abfolge beim Durchgang der Objekte 01,02 durch die Öffnung 2 zu erzeugen. Das Sicherheitsprogramm AW weist weiterhin ein Vergleichsmittel VM auf, welches ausgestaltet ist Spalte n für Spalte n+1 (siehe FIG 5 bis FIG 7) die zu erwartenden Signalreihen ESi der Matrix M mit den aktuell beim Durchgang des Objektes O1 erzeugten Signalreihen Si zu vergleichen, wobei eine Spalte n jeweils einen Abtastschritt Ti entspricht.

Das Sicherheitsprogramm AW ist ausgestaltet, dass das Abschaltsignal AS erzeugt wird, wenn eine Abweichung zwischen der zu erwartenden Signalreihe ESi und der aktuell aufgenommenen Signalreihe Si festgestellt wird.

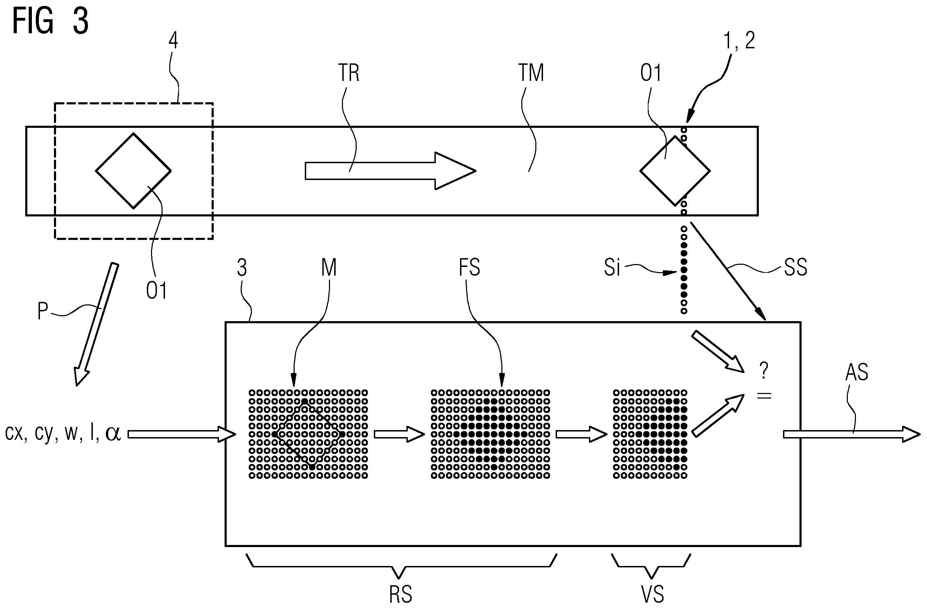

Die FIG 3 zeigt in einer zeitlichen Abfolge was die Überwachungseinrichtung 100 erkennt und rekonstruiert bzw. anschließend vergleicht. Das Objekterkennungssystem 4 erkennt das erste Objekt O1 und sendet Parameter P, wie z.B. Mittelpunktkoordinaten cx,cy, eine Breite w, eine Länge 1 und eine Drehung um die Z-Achse α, welche angibt wie beispielsweise eine Kiste auf den Transportmittel TM ausgerichtet ist. Das erste Objekt O1 fährt nun in Transportrichtung TR weiter zu dem Lichtvorhang 1 bzw. zu der Öffnung 2, in der Zeit, in welcher das erste Objekt O1 weiterfährt, werden in der Steuerungseinheit 3 aus den erzeugten Parametern P in einem Rekonstruktionsschritt RS zunächst in einer Matrix M die Ecken des Objektes O1 nachgebildet. Mit dem nachgebildeten Ecken lässt sich ein Umfang bestimmen und dieser Umfang wird in einen Füllschritt FS mit zu erwartenden Signalreihen ESi, wie sie in ihrer zeitlichen Abfolge beim Durchgang der Objekte O1 durch die Öffnung 2 entstehen aufgefüllt. In einem anschließenden Vergleichsschritt VS wird Spalte n für Spalte n+1 die zu erwartende Signalreihe ESi der Matrix M mit den bei dem aktuellen Durchgang des Objektes O1 erzeugten Signalreihen Si verglichen. Zur Erhöhung der Sicherheit sendet die Steuerungseinheit 3 noch ein einzelnes Boolesches Signal SS aus.

Dies bietet den Vorteil, dass die Signalreihe nicht unbedingt mit einem Sicherheitsprotokoll übertragen werden muss. Dann hätte man in einer Ausgestaltungsvariante eine Überwachungseinrichtung 100, bei welcher die Signalreihe Si vom Lichtvorhang zur Sicherheitssteuerung mittels eines nicht-sicheren Kommunikationsprotokolls übertragen werden, aber zusätzlich ein einzelnes Boolesches Signal SS an die Steuerungseinheit 3 übertragen wird, wobei das Sicherheitsprogramm AW ausgestaltet ist aufgrund des einzelnen Booleschen Signals SS das Abschaltsignal AS zu erzeugen. Oder man hätte eine Überwachungseinrichtung 100, bei welcher die Signalreihe Si vom Lichtvorhang zur Sicherheitssteuerung mittels eines sicheren Kommunikationsprotokolls übertragen wird.

FIG 4 zeigt die Matrix M wie sie durch den Rekonstruktionsalgorithmus RA erzeugt wird. Das Objekterkennungssystem 4 hat Paramater P für ein Quadrat geliefert, und zwar entspricht dies einer Kiste, welche um 45 Grad gedreht auf dem Förderband steht. Die einzelnen Sensoren bzw. die Empfänger E1,...,E11 würden beim Durchgang der Kiste durch den Lichtvorhang 1 die Signale gemäß der erzeugten Matrix M erzeugen. Demnach besteht die Matrix M aus zu erwartenden Signalreihen ES1,...,ES10.

Die FIG 5 zeigt das Auffüllen mit den zu erwartenden Signalreihen ES1,...,ES10 durch den Füllschritt FS.

Die FIG 6 zeigt das zeitliche nacheinander Abarbeiten der Signalreihen ES1,...,ES10 für einem Vergleich der zu erwartenden Signalreihen ESi mit den tatsächlich erzeugten Signalreihen ESi.

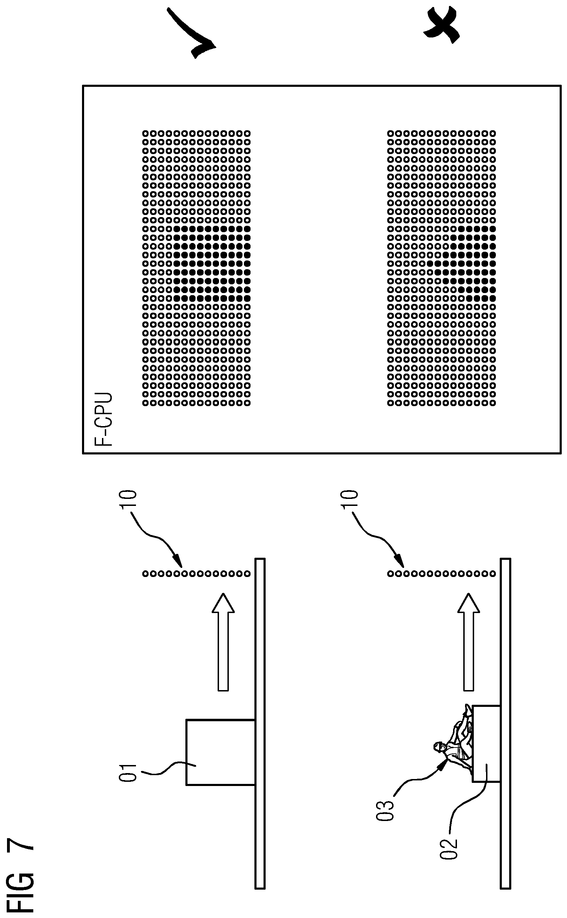

FIG 7 beschreibt einen Sonderfall für besonders große Kisten, denn sitzt auf einer großen Kiste hier im Beispiel ein zweites Objekt O2, ein drittes Objekt O3 und ist das dritte Objekt O3 ein Mensch, so kann es zu einer gefährlichen Situation kommen. Um dies zu verhindern, wird ein weiterer Lichtvorhang 10 ausgewertet, welcher nach dem gleichen Prinzip wie der erste Lichtvorhang 1 arbeitet. Da man mit einen Lichtvorhang 1 nur die Grundfläche der großen Kiste sicher erkennen kann und weil sich auf großen Kisten Menschen verstecken könnten, kann auch ein Mensch auf einer großen Kiste mit dem zweiten Lichtvorhang erkannt werden.

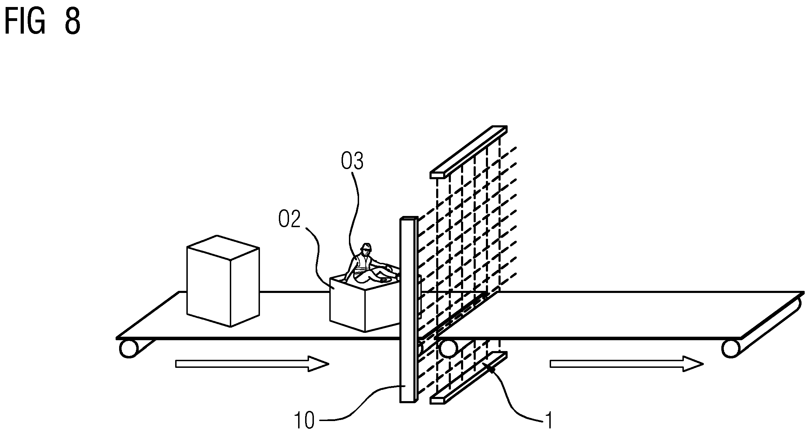

Mit der FIG 8 ist dies noch einmal symbolisch dargestellt.

## Patentansprüche

1. System umfassend
eine Überwachungseinrichtung (100) und
ein Transportmittel (TM), wobei die Überwachungseinrichtung (100) zur Überwachung einer Öffnung (2), durch welche Objekte (01,02,03) mittels des Transportmittels (TM) eingeschleust werden, ausgestaltet ist, weiterhin aufweisend
- einem Lichtvorhang (1), umfassend
- eine Sender-Anordnung (S) mit mehreren Lichtstrahlen emittierenden Sendern (S1,...,S11) und
- eine Empfänger-Anordnung (E) mit mehreren Lichtstrahlen empfangenen Empfängern (E1,...,E11), welche eine Unterbrechung eines Lichtstrahls erkennen und ein Signal(U) bereitstellen,
- ein Abtastmittel ausgestaltet die Signale (U) der Empfänger (E1,...,E11) des Lichtvorhangs (1) in zeitlich aufeinanderfolgenden Abtastschritten (Ti) abzutasten und jeweils als eine Signalreihe (Si) bereitzustellen,
- eine Steuerungseinheit (3) umfassend ein Sicherheitsprogramm (AW) ausgestaltet ein Abschaltsignal (AS) auszusenden, um einen gefahrbringenden Zustand zu vermeiden,
- ein Objekterkennungssystem (4), welches entgegen einer Transportrichtung (TR) vor dem Lichtvorhang (1) angeordnet ist und ausgestaltet ist die Objekte (01,02,03) zu erkennen und daraus Parameter (P) für ihre geometrische Form abzuleiten,
- wobei das Sicherheitsprogramm (AW) einen Rekonstruktionsalgorithmus (RA) aufweist, welcher ausgestaltet ist aus den Parametern (P) eine Matrix (M) mit zu erwartenden Signalreihen (ESi) in ihrer zeitlichen Abfolge bei einem Durchgang der Objekte durch die Öffnung zu erzeugen,
**dadurch gekennzeichnet, dass**
- der Lichtvorhang (1) an der Öffnung (2) derart angeordnet ist, dass die Lichtstrahlen orthogonal zu einer Transportebene (TE) des Transportmittels (TM) verlaufen, damit ist der Lichtvorhang (1) so angeordnet, dass die Lichtstrahlen senkrecht verlaufen, wodurch die Form einer Grundfläche der Objekte für den Lichtvorhang erkennbar ist,
- das Sicherheitsprogramm (AW) ein Vergleichsmittel (VM) aufweist, welches ausgestaltet ist Spalte (n) für Spalte (n+1) die zu erwartenden Signalreihen (ESi) der Matrix (M) mit den aktuell beim Durchgang des Objektes (01,02,03) erzeugten Signalreihen (Si) zu vergleichen, wobei eine Spalte (n) jeweils einem Abtastschritt (Ti) entspricht,
- das Sicherheitsprogramm (AW) ausgestaltet ist, dass das Abschaltsignal (AS) erzeugt wird, wenn eine Abweichung zwischen der zu erwartenden Signalreihe (ESi) und der aktuell aufgenommenen Signalreihen (Si) festgestellt wird.

2. Überwachungseinrichtung (100) nach Anspruch 1, wobei der Lichtvorhang (1) weiterhin ausgestaltet ist ein einzelnes Boolesches Signal (SS) an die Steuerungseinheit (3) zu übertragen, wobei das Sicherheitsprogramm (AW) ausgestaltet ist aufgrund des einzelnen Booleschen Signals (SS) das Abschaltsignal (AS) zu erzeugen, wobei das Sicherheitsprogramm (AW) weiterhin ausgestaltet ist, das für den Fall das die zu erwartende Signalreihe (ESi) mit der aktuell aufgenommenen Signalreihe (Si) übereinstimmt, das Erzeugen des Abschaltsignals (AS) unterdrückt wird.

3. Überwachungseinrichtung (100) nach Anspruch 1 oder 2, aufweisend
- einem weiteren Lichtvorhang (10),
- wobei der weitere Lichtvorhang (1) an der Öffnung (2) derart angeordnet ist, dass die Lichtstrahlen parallel zu der Transportebene (TE) verlaufen.

4. Verfahren zur Überwachung einer Öffnung (2), durch welche Objekte (01,02,03) mittels eines Transportmittels (TM) eingeschleust werden, wobei in oder unmittelbar vor der Öffnung (2) mit einem Lichtvorhang (1) Lichtstrahlen erzeugt werden, wobei mehrere Lichtstrahlen emittierende Sender (S1,...,S11) einer Sender-Anordnung (S) auf mehrere Lichtstrahlen empfangene Empfänger (E1,...,E11) einer Empfänger-Anordnung (E) ausgerichtet werden, wobei bei einer Unterbrechung eines Lichtstrahls dieses erkannt wird und wobei für den jeweiligen Empfänger (E1,...,E11) ein Signal( U) bereitgestellt wird,
wobei der Lichtvorhang (1) in oder unmittelbar vor der Öffnung (2) derart betrieben wird, dass die Lichtstrahlen orthogonal zu einer Transportebene (TE) des Transportmittels (TM) verlaufen, wobei mit einem Abtastmittel (2) die Signale (U) der Empfänger (E1,...,E11) des Lichtvorhang (1) in zeitlich aufeinander folgenden Abtastschritten (Ti) abgetastet werden und als eine Signalreihe (Si) bereitgestellt werden, um einen gefahrbringenden Zustand zu vermeiden wird über eine Steuerungseinheit (3) mit einem Sicherheitsprogramm (AW) ein Abschaltsignal (AS) ausgesendet, wobei
entgegen einer Transportrichtung (TR) vor dem Lichtvorhang (1) ein Objekterkennungssystem (4) betrieben wird die Objekte (01,02,03) zu erkennen und daraus Parameter (P) für ihre geometrische Form ableitet,
wobei mittels eines Rekonstruktionsalgorithmus (RA) aus den Parametern (P) eine Matrix (M) mit zu erwartenden Signalreihen (ESi) in ihrer zeitlichen Abfolge erzeugt werden, wie diese bei einem Durchgang der Objekte durch die Öffnung entstehen,
**dadurch gekennzeichnet, dass** der Lichtvorhang (1) an der Öffnung (2) derart betrieben wird, dass die Lichtstrahlen orthogonal zu einer Transportebene (TE) des Transportmittels (TM) verlaufen,
damit wird der Lichtvorhang (1) so betrieben, dass die Lichtstrahlen senkrecht verlaufen, wodurch die Form einer Grundfläche der Objekte für den Lichtvorhang erkennbar wird,
wobei mit einem Vergleichsmittel (VM) dann Spalte (n) für Spalte (n+1) der Matrix (M) die zu erwartenden Signalreihen (ESi) mit den aktuell beim Durchgang des Objektes (01,02,03) erzeugten Signalreihen (Si) verglichen werden,
wobei der spaltenweise Vergleich mit den Abtastschritten (Ti) synchronisiert wird, wobei das Abschaltsignal erzeugt wird, wenn eine Abweichung zwischen der zu erwartenden Signalreihe (ESi) und der aktuell aufgenommenen Signalreihen (Si) festgestellt wird.

5. Verfahren nach Anspruch 4, wobei der Lichtvorhang (1) weiterhin betrieben wird ein einzelnes Boolesches Signal (SS) an die Steuerungseinheit (3) zu übertragen und aufgrund des einzelnen Booleschen Signals (SS) das Abschaltsignal (AS) zu erzeugen, wobei für den Fall, dass die zu erwartende Signalreihe (ESi) mit der aktuell aufgenommenen Signalreihe (Si) übereinstimmt, das Erzeugen des Abschaltsignals (AS) unterdrückt wird.

## Claims

1. System comprising
a monitoring facility (100) and
a transportation means (TM), wherein the monitoring facility 100) is designed for monitoring an opening (2), through which objects (01,02,03) are channelled by means of the transportation means (TM), furthermore having
- a light curtain (1), comprising
- a transmitter array (S) with multiple transmitters (S1,...,S11) emitting light beams and
- a receiver array (E) with multiple receivers (E1,...,E11) receiving light beams, which recognise an interruption of a light beam and provide a signal (U),
- a scanning means designed to scan the signals (U) of the receivers (E1,...,E11) of the light curtain (1) in chronologically consecutive scanning steps (Ti) and in each case to provide them as a signal series (Si),
- a control unit (3) comprising a safety program (AW) designed to emit a shut-off signal (AS), in order to prevent a dangerous situation,
- an object recognition system (4), which is arranged opposite to a direction of transportation (TR) in front of the light curtain (1) and is designed to recognise the objects (01,02,03) and to derive parameters (P) therefrom for their geometric shape,
- wherein the safety program (AW) has a reconstruction algorithm (RA) which is designed to generate from the parameters (P) a matrix (M) containing expected signal series (ESi) in their chronological order during a passage of the objects through the opening,
c h a r a c t e r i s e d i n that
- the light curtain (1) is arranged at the opening (2) such that the light beams run orthogonally to a transportation plane (TE) of the transportation means (TM), with the light curtain (1) being arranged such that the light beams run perpendicularly, as a result of which the shape of a base area of the objects becomes recognisable for the light curtain,
- the safety program (AW) has a comparison means (VM) which is designed to compare column (n) by column (n+1) the expected signal series (ESi) of the matrix (M) with the signal series (Si) currently being generated during the passage of the object (01,02,03), wherein each column (n) corresponds to a scanning step (Ti),
- the safety program (AW) is designed so that the shut-off signal (AS) is generated if a deviation is established between the expected signal series (ESi) and the signal series currently being acquired (Si).

2. Monitoring facility (100) according to claim 1, wherein the light curtain (1) is further designed to transmit an individual Boolean signal (SS) to the control unit (3), wherein the safety program (AW) is designed to generate the shut-off signal (AS) on the basis of the individual Boolean signal (SS), wherein the safety program (AW) is further designed, if the expected signal series (ESi) matches the signal series currently being acquired (Si), to suppress the generation of the shut-off signal (AS).

3. Monitoring facility (100) according to claim 1 or 2, having
- a further light curtain (10),
- wherein the further light curtain (1) is arranged at the opening (2) such that the light beams run parallel to the transportation plane (TE).

4. Method for monitoring an opening (2), through which objects (01,02,03) are channelled by means of a transportation means (TM), wherein light beams are generated in or immediately in front of the opening (2) with a light curtain (1), wherein multiple transmitters (S1,...,S11) of a transmitter array (S) emitting light beams are oriented to multiple receivers (E1,...,E11) of a receiver array (E) receiving light beams, wherein in the event of an interruption of a light beam this is recognised and wherein a signal (U) is provided for the respective receiver (E1,...,E11),
wherein the light curtain (1) is operated in or immediately in front of the opening (2) such that the light beams run orthogonally to a transportation plane (TE) of the transportation means (TM), wherein using a scanning means (2) the signals (U) of the receivers (E1,...,E11) of the light curtain (1) are scanned in chronologically consecutive scanning steps (Ti) and are provided as a signal series (Si); in order to prevent a dangerous situation a shut-off signal (AS) is emitted via a control unit (3) with a safety program (AW), wherein
an object recognition system (4) is operated opposite to a direction of transportation (TR) in front of the light curtain (1) to recognise the objects (01,02,03) and therefrom derives parameters (P) for their geometric shape,
wherein by means of a reconstruction algorithm (RA) a matrix (M) containing expected signal series (ESi) in their chronological order is generated from the parameters (P), as arise during a passage of the objects through the opening,
c h a r a c t e r i s e d i n that
the light curtain (1) is operated at the opening (2) such that the light beams run orthogonally to a transportation plane (TE) of the transportation means (TM),
with the light curtain (1) being arranged such that the light beams run perpendicularly, as a result of which the shape of a base area of the objects becomes recognisable for the light curtain,
wherein, using a comparison means (VM), the expected signal series (ESi) are then compared column (n) by column (n+1) of the matrix (M) with the signal series (Si) currently being generated during the passage of the object (01,02,03), wherein the column by column comparison is synchronised with the scanning steps (Ti), wherein the shut-off signal is generated if a deviation between the expected signal series (ESi) and the signal series currently being acquired (Si) is established.

5. Method according to claim 4, wherein the light curtain (1) is further operated to transmit an individual Boolean signal (SS) to the control unit (3) and on the basis of the individual Boolean signal (SS) to generate the shut-off signal (AS), wherein if the expected signal series (ESi) matches the signal series (Si) currently being acquired the generation of the shut-off signal (AS) is suppressed.

## Revendications

1. Système comprenant
un dispositif (100) de surveillance et
un moyen (TM) de transport, dans lequel le dispositif (100) de surveillance est conformé pour la surveillance d'une ouverture (2), par laquelle des objets (O1, O2, O3) peuvent être entrés au moyen du moyen (TM) de transport, comportant en outre
- un rideau (1) optique, comprenant
- un agencement (S) d'émetteurs ayant plusieurs émetteurs (S1, ..., S11) émettant des faisceaux lumineux et
- un agencement (E) de récepteurs ayant plusieurs récepteurs (E1, ..., E11) recevant des faisceaux lumineux, qui identifient une interruption d'un faisceau lumineux et donnent un signal (U),
- un moyen d'échantillonnage constitué pour échantillonner les signaux (U) des récepteurs (E1, ..., E11) du rideau (1) optique dans des stades (Ti) d'échantillonnage se succédant dans le temps et les donner respectivement sous la forme d'une série (Si) de signaux,
- une unité (3) de commande comprenant un programme (AW) sécurisé conformé pour envoyer un signal (AS) d'arrêt, afin d'éviter un état dangereux,
- un système (4) de reconnaissance d'objet, qui est monté avant le rideau (1) optique dans le sens contraire au sens (TR) de transport et qui est conformé pour identifier les objets (O1, O2, O3) et en déduire des paramètres (P) de leur forme géométrique,
- dans lequel le programme (AW) sécurisé comporte un algorithme (RA) de reconstruction, qui est conformé pour produire, à partir des paramètres (P), une matrice (M) avec des séries (ESi) de signaux à escompter dans leur succession dans le temps lors du passage des objets dans l'ouverture, **caractérisé en ce que**
- le rideau (1) optique est monté sur l'ouverture (2), de manière à ce que les faisceaux lumineux s'étendent orthogonalement à un plan (TE) de transport du moyen (TM) de transport, le rideau (1) optique étant ainsi monté de manière à ce que les faisceaux lumineux s'étendent verticalement, grâce à quoi la forme d'une surface de base des objets pour le rideau optique peut être identifiée,
- le programme (AW) sécurisé a un moyen (VM) de comparaison, qui est conformé pour comparer, colonne (n) par colonne (n+1), les séries (ESi) de signaux à escompter de la matrice (M) aux séries (Si) de signaux produites en cours lors du passage de l'objet (O1, O2, O3), dans lequel une colonne (n) correspond respectivement à un stade (Ti) d'échantillonnage,
- le programme (AW) sécurisé est conformé de manière à produire le signal (AS) d'arrêt, s'il est constaté un écart entre la série (ESi) de signal à escompter et les séries (Si) de signaux enregistrées en cours.

2. Dispositif (100) de surveillance suivant la revendication 1, dans lequel le rideau (1) optique est conformé en outre pour transmettre un signal (SS) individuel booléen à l'unité (3) de commande, dans lequel le programme (AW) sécurisé est conformé pour, sur la base du signal (SS) individuel booléen, produire le signal (AS) d'arrêt, dans lequel le programme (AW) sécurisé est conformé en outre pour, dans le cas où la série (ESi) de signal à escompter coïncide avec la série (Si) de signal enregistrée en cours, supprimer la production du signal (AS) d'arrêt.

3. Dispositif (100) de surveillance suivant la revendication 1 ou 2, comportant
- un autre rideau (10) optique,
- dans lequel l'autre rideau (1) optique est monté sur l'ouverture (2), de manière à ce que les faisceaux lumineux s'étendent parallèlement au plan (TE) de transport.

4. Procédé de surveillance d'une ouverture (2), par laquelle des objets (O1, O2, O3) peuvent être entrés au moyen d'un moyen (TM) de transport, dans lequel, dans ou directement avant l'ouverture (2) ayant le rideau (1) optique, on produit des faisceaux lumineux, dans lequel plusieurs émetteurs (S1, ..., S11) émettant de faisceaux lumineux d'un agencement (S) d'émetteurs sont dirigés sur plusieurs récepteurs (E1, ..., E11) recevant des faisceaux lumineux d'un agencement (E) de récepteurs, dans lequel, lors d'une interruption d'un faisceau lumineux, celui-ci est identifié et dans lequel on donne, pour les récepteurs (E1, ..., E11) respectifs, un signal (U),
dans lequel le rideau (1) optique fonctionne dans ou directement avant l'ouverture (2), de manière à ce que les faisceaux lumineux s'étendent orthogonalement à un plan (TE) de transport du moyen (TM) de transport, dans lequel, par un moyen (2) d'échantillonnage, on échantillonne les signaux (U) des récepteurs (E1, ..., E11) du rideau (1) optique dans des stades (Ti) d'échantillonnage se succédant dans le temps, et on les donne sous la forme d'une série (Si) de signaux, afin d'empêcher un état dangereux et, par une unité (3) de commande ayant un programme (AW) sécurisé, on envoie un signal (AS) d'arrêt, dans lequel
on fait fonctionner un système (4) de reconnaissance d'objet avant le rideau (1) optique dans le sens contraire au sens (TR) de transport et on identifie les objets (O1, O2, O3) et on en déduit des paramètres (P) de leur forme géométrique,
dans lequel, au moyen d'un algorithme (RA) de reconstruction, on produit, à partir des paramètres (P), une matrice (M) avec des séries (ESi) de signaux à escompter dans leur succession dans le temps, comme ceux-ci se créent lors d'un passage dans l'ouverture, **caractérisé en ce que**
l'on fait fonctionner le rideau (1) optique sur l'ouverture (2) de manière à ce que les faisceaux lumineux s'étendent orthogonalement à un plan (TE) de transport du moyen (TM) de transport, en faisant ainsi fonctionner le rideau (1) optique, de manière à ce que les faisceaux lumineux s'étendent verticalement, grâce à quoi la forme d'une surface de base des objets peut être identifiée pour le rideau optique,
dans lequel, par un moyen (VM) de comparaison, on compare, colonne (n) par colonne (n+1) de la matrice (M), les séries (ESi) de signaux à escompter aux séries (Si) de signaux produites en cours lors du passage de l'objet (O1, O2, O3), dans lequel on synchronise la comparaison colonne par colonne avec les stades (Ti) d'échantillonnage, dans lequel on produit le signal d'arrêt, s'il est constaté un écart entre la série (ESi) de signaux à escompter et les séries (Si) de signaux enregistrées en cours.

5. Procédé suivant la revendication 4, dans lequel on fait fonctionner le rideau (1) optique de manière à transmettre un signal (SS) individuel booléen à l'unité (3) de commande et, en raison du signal (SS) individuel booléen, à reproduire le signal (AS) d'arrêt, dans lequel, dans le cas où la série (ESi) de signal à escompter coïncide avec la série (Si) de signal enregistrée en cours, on supprime la production du signal (AS) d'arrêt.
